# EUROPEAN PATENT APPLICATION

(11) **EP 1 835 592 A1**
(43) Date of publication of application: **19.09.2007**
(21) Application number: 06425179.6
(22) Date of filing: 17.03.2006
(51) Int. Cl.: H02J 3/24

(54) **Method and system for controlling a combination-cycle electric power plant, in particular a single-shaft plant**

(71) Applicant: ANSALDO ENERGIA S.P.A., 16152 Genova (IT)
(72) Inventor: Lombardi, Filippo, 16026 Montoggio (IT); Marino, Daniela, 16100 Genova (IT)
(74) Representative: Jorio, Paolo

(57) **Abstract**

A system and method for controlling a combination-cycle electric power plant (1) having a gas cycle system (2), a steam cycle system (3) connected to the gas cycle system (2), and an electric energy generating system (4) connected to the gas cycle system (2) and the steam cycle system (3); the system having electronic processing means (21, 24) configured to control operating conditions of the steam cycle system (3) to balance a variation (Δ*P*, Δ*V*) in a first operating output quantity *(P_{EL}, V_{G})* of the plant, and to control operating conditions of the gas cycle system (2) to assist in balancing the variation (Δ*P*, Δ*V*) in the first operating output quantity *(P_{EL}, V_{G})* of the plant in the event control of the operating conditions of the steam cycle system (3) fails to balance the variation (Δ*P*, Δ*V*) in the first operating output quantity *(P_{EL}, V_{G}).*

## Description

The present invention relates to a method and system for controlling a combination-cycle electric power plant, in particular a single-shaft plant.

As is known, combination-cycle electric power plants combine two technological cycles - one employing air and a liquid or gaseous fuel (so-called gas cycle), and the other employing water and steam (so-called steam cycle) - and may be either multi-shaft design - in which one generator is connected to a gas turbine, and another generator is connected to a steam turbine - or single-shaft design - in which one generator is connected by a single shaft to both the gas and steam turbines.

As is known, both multi-shaft and single-shaft combination-cycle plants are equipped with control systems which, among other things, control so-called transient operation of the plant produced by variations in electric network power demand.

The electric network, in fact, is the end user of the power produced by the generator, to which it is connected by a so-called "Main Switch".

The output voltage of the generator is adapted to the network voltage by means of a transformer.

More specifically, the network is said to be of "Infinite Power" when it is able to manage power exchanges of any amount with the generator without causing any variation in network voltage frequency ω_{R}.

Conversely, the network is operated in a so-called "Island Operation" mode when it is unable to manage power exchanges of any amount with the generator without causing variations in network voltage frequency ω_{R}.

An operator at the plant is normally notified beforehand of any variation in power demand by the network to which the electric generator of the plant is connected, and accordingly adjusts the power output of the generator to adapt to the load in time.

A network that works in a so-called "Island Operation" mode can be connected to a number of generators and different loads - seldom quantifiable accurately instant by instant - so that any variation in network frequency depends solely on the energy balance between the power output of the generators and power draw by users.

When a transient operating state occurs, most combination-cycle plant control systems balance the electric power output of the generator by mainly altering the operating characteristics of the gas cycle, i.e. by increasing or reducing the mechanical power of the gas turbine, by means of a gas turbine regulating device known as a "Fuel Controller".

In transient operating states, the steam cycle of a combination-cycle plant is normally excluded or at most operated to "conform" with the variation in power of the gas turbine.

The transient operating conditions of the plant are regulated by acting on the gas turbine. This type of regulation, however, has serious drawbacks, especially in the case of short-term transient states, and when a rapid variation in power output of the gas turbine is necessary. Gas turbines, in fact, seldom permit rapid variations in power output, on account of the way they are built and operated, e.g. on account of problems involving the thermal gradient of the combustion chamber, flame instability when premixing the fuel, and the onset of compressor pumping phenomena caused by a rapid increase in compression ratio.

It is an object of the present invention to provide an integrated system and method for controlling a combination-cycle electric power plant, in particular a single-shaft plant, designed to improve known control systems and methods, and which provides for optimum transient operation control of the plant.

According to the present invention, there is provided an integrated system and method for controlling a combination-cycle electric power plant, in particular a single-shaft plant, as claimed in Claim 1.

A preferred, non-limiting embodiment of the present invention will be described by way of example with reference to the accompanying drawings, in which:
Figure 1 shows a block diagram of a single-shaft, combination-cycle electric power plant featuring the integrated control system according to the invention;
Figure 2 shows a block diagram of the integrated control system according to the invention.

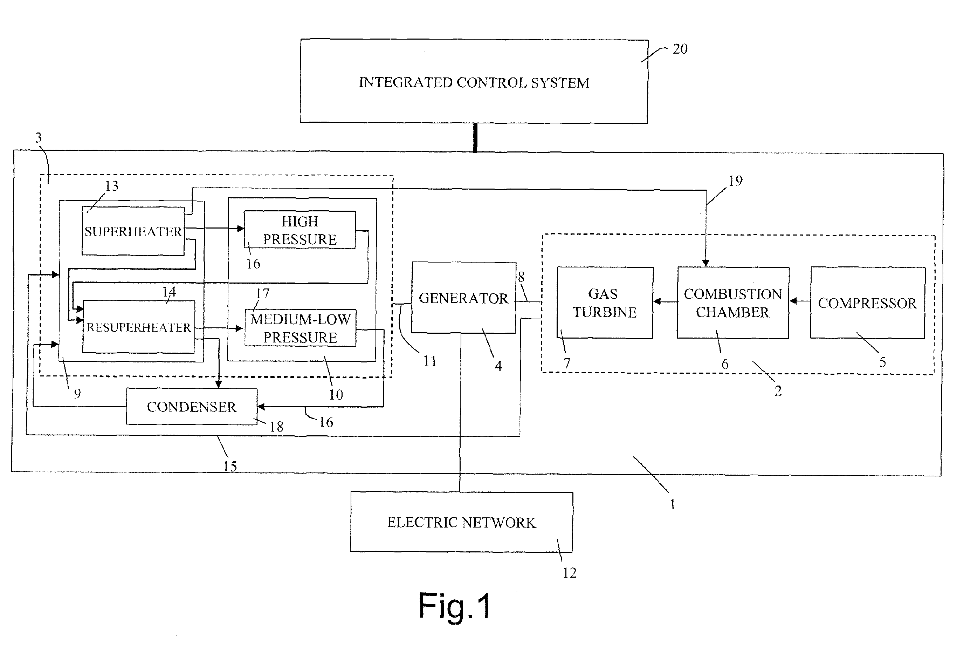

Number 1 in the Figure 1 block diagram indicates as a whole a single-shaft, combination-cycle electric power plant comprising a gas cycle 2, a steam cycle 3, and an electric generator 4.

More specifically, gas cycle 2 comprises a compressor 5 connected to a combustion chamber 6, in turn connected to a gas turbine 7, the shaft 8 of which is connected mechanically to the rotor (not shown in Figure 1) of electric generator 4.

Steam cycle 3 comprises a steam generator 9 connected to a steam turbine 10, in turn connected mechanically by a self-synchronizing clutch 11, to the rotor of electric generator 4. Electric generator 4 is connected electrically to an electric network 12 by a main switch BAC (not shown).

More specifically, steam generator 9 comprises a superheater 13 and a reheater 14, which are connected to steam turbine 10 and supplied by a pipe 15 with the exhaust gas from gas turbine 7.

More specifically, steam turbine 10 comprises a high-pressure section 16 connected to superheater 13 by a valve *CV* (not shown in Figure 1); and a medium-low-pressure section 17 connected to reheater 14 by a valve *IV* (not shown in Figure 1).

Steam cycle 3 also comprises a bypass valve *BP_{CV}* (not shown in Figure 1) associated with valve *CV* and connecting the outlet of superheater 13 to the inlet of reheater 14; and a bypass valve *BP_{IV}* (not shown in Figure 1) associated with valve *IV* and connecting the outlet of reheater 14 to a condenser 18.

Plant 1 also comprises a pipe 19 connecting the outlet of superheater 13 to combustion chamber 6 of gas turbine 7; and :
- a valve *CV_{STEAM_INJ}* (not shown in Figure 1) for regulating steam supply to combustion chamber 6 along pipe 19;
- a valve *CV_{SH}* (not shown in Figure 1) for regulating high-pressure steam supply from superheater 13 to pipe 19; and
- a valve *CV_{SAT}* (not shown in Figure 1) for regulating saturated steam supply - at a lower temperature than the high-pressure steam from superheater 13 - from a high-pressure cylindrical body (not shown in Figure 1) to pipe 19.

Plant 1 operates as follows.

Compressor 5 draws in outside air, compresses it to high pressure, and feeds it to combustion chamber 6 via a flow regulating valve *IGV.* Combustion chamber 6 is also supplied, via a flow regulating valve *CGV,* with fuel, normally in the form of natural gas.

Inside combustion chamber 6, the compressed-air and gas mixture is ignited to form high-pressure, high-temperature gas, which is fed to gas turbine 7. Inside gas turbine 7, the high-pressure gas expands and rotates shaft 8 of gas turbine 7 to drive the rotor of electric generator 4, which generates an alternating voltage of a frequency depending on the rotation speed of the rotor of electric generator 4.

To improve the efficiency of plant 1, the exhaust gas from gas turbine 7 is fed along exhaust pipe 15 to steam generator 9, to supply superheater 13 and reheater 14, in which the exhaust gas yields heat to and superheats water already vapourized in the steam generator evaporators (not shown in Figure 1).

More specifically, the steam from superheater 13 is high-pressure steam, which is fed via valve *CV* to high-pressure section 16 of steam turbine 10; and the steam from reheater 14 is medium-pressure steam, which is fed via valve *IV* to medium-low-pressure section 17 of steam turbine 10.

If the steam turbine shaft has been "connected" to the shaft of generator 4 by self-synchronizing clutch 11, the torque produced by steam turbine 10 is transmitted via the clutch to generator 4.

In particular operating conditions of plant 1, in which not all the steam from superheater 13 can be fed to high-pressure section 16 of steam turbine 10, e.g. as when starting up plant 1, the surplus steam from superheater 13 may be fed either to reheater 14 via bypass valve *BP_{CV},* or along pipe 19 and via valve *CV_{STEAM_INJ}* to combustion chamber 6 of gas turbine 7.

To use the surplus steam from superheater 13 to supply gas turbine 7, the temperature of the steam must be reduced before it is fed into combustion chamber 6 of gas turbine 7. For which purpose, the high-pressure steam from superheater 13 is mixed with the saturated vapour from the high-pressure cylindrical body by means of valves *CV_{SH}* and *CV_{SAT},* which respectively regulate the flow of high-pressure steam from superheater 13 and the flow of saturated vapour from the high-pressure cylindrical body to achieve the desired temperature.

Recycling the high-pressure steam from superheater 13 provides for both improving the efficiency of plant 1, and, if the steam is used to supply gas turbine 7, reducing the emissions of plant 1 by mixing the steam with the fuel and so reducing the temperature of the combustion chamber.

The electric power output of generator 4 therefore depends on the total mechanical power produced by turbines 7 and 10.

Number 20 in Figure 1 indicates an integrated control system comprising a number of microprocessor electronic processing units and solid-state electronic circuits (neither shown) for performing a number of regulating algorithms, and which receive signals from sensors and measuring instruments connected to plant 1, and generate control signals for controlling operating actuators of plant 1.

More specifically, integrated control system 20 according to the invention is configured to control all the operating quantities of plant 1 simultaneously and coordinately, so as to optimize dynamic performance of plant 1 at each operating stage, commencing from start-up, and ensure frequency remains constant in both normal and transient operating conditions.

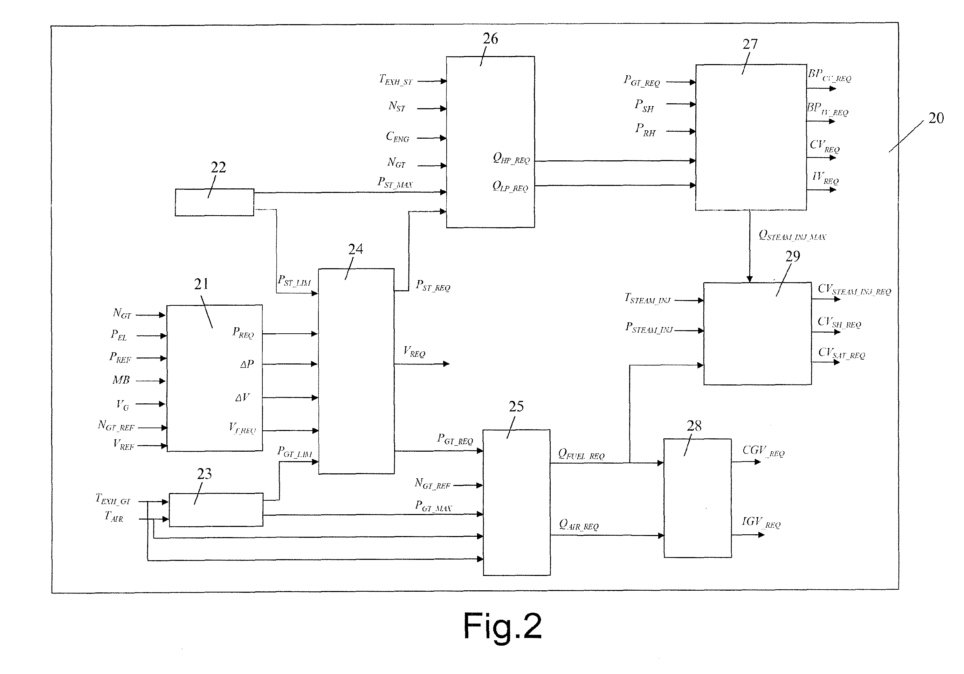

For which purpose, as shown in Figure 2, control system 20 comprises:
- an electronic processing unit 21 for mainly controlling a number of electric and mechanical quantities required of plant 1;
- an electronic processing unit 22 for controlling a number of threshold values of quantities indicating mechanical and thermal stress of steam turbine 10;
- an electronic processing unit 23 for controlling a number of threshold values of quantities indicating mechanical and thermal stress of gas turbine 7;
- an electronic processing unit 24, connected to electronic processing units 21, 22 and 23, to control distribution of the mechanical power required of gas turbine 7 and steam turbine 10;
- an electronic processing unit 25, connected to electronic processing units 23 and 24, to control start-up of gas turbine 7;
- an electronic processing unit 26, connected to electronic processing units 22 and 24, to control start-up of steam turbine 10;
- an electronic processing unit 27, connected to electronic processing unit 26, to control steam feed valves *CV* and *IV* and bypass valves *BP_{CV}* and *BP_{IV}* of steam turbine 10;
- an electronic processing unit 28, connected to electronic processing unit 25, to control fuel and air feed to combustion chamber 6; and
- an electronic processing unit 29, connected to electronic processing unit 28, to control steam supply from steam generator 9 to gas turbine 7.

More specifically, electronic processing unit 21 calculates the total mechanical power *P_{REQ}* required of gas turbine 7 and steam turbine 10 for plant 1 to produce an instantaneous electric power *P_{EL}* equal to a set reference electric power *P_{REF}.*

For which purpose, a number of reference quantities of plant 1 are memorized in electronic processing unit 21, such as:
- the desired reference electric power *P_{REF},* e.g. 100 MW;
- a desired reference voltage *V_{REF},* e.g. 16kV, at the terminals of generator 4;
- the gas turbine rotation speed *N_{GT_REF}* required for plant 1 to produce the electric power absorbable by the network but not necessarily equal to the desired reference electric power *P_{REF};* and
- a number of operating quantities detected by the sensors connected to plant 1, such as:
   - the rotation speed *N_{GT}* of gas turbine 7;
   - the instantaneous electric power output *P_{EL}* of electric generator 4;
   - the state *MB (ON, OFF)* of main switch *BAC* of generator 4; and
   - the voltage *V_{G}* at the terminals of generator 4.

On the basis of the above reference quantities and sensor-detected operating quantities, electronic processing unit 21 calculates:
- the instantaneous electric power difference Δ*P* between desired reference electric power *P_{REF}* and electric power output *P_{EL};* and
- the instantaneous voltage difference Δ*V* between reference voltage *V_{REF}* and voltage *V_{G}* at the terminals of generator 4.

On the basis of instantaneous electric power difference Δ*P*, electronic processing unit 21 then calculates the total mechanical power *P_{REQ}* required of plant 1 for generator 4 to produce an instantaneous electric power *P_{EL}* equal to desired reference electric power *P_{REF},* minus a correction generated by the difference between reference speed *N_{GT_REF}* and measured speed N_{GT}, and so that the power difference Δ*P* equals zero at the end of the transient state.

Similarly, on the basis of instantaneous voltage difference Δ*V*, electronic processing unit 21 calculates the excitation voltage *V_{f_REQ}* of generator 4 required for the voltage *V_{G}* produced by generator 4 to equal desired reference voltage *V_{REF}.*

In electronic processing units 22 and 23, a number of threshold values are memorized of quantities indicating mechanical and thermal stress of steam turbine 10, and on the basis of which electronic processing units 22 and 23 calculate and generate respectively:
- the mechanical power *P_{ST_LIM}* steam turbine 10 can still produce without exceeding the set threshold values of the maximum mechanical and thermal stress steam turbine 10 can withstand; and
- the maximum mechanical power *P_{ST_MAX}* steam turbine 10 can produce in relation to the set threshold values of the maximum mechanical and thermal stress steam turbine 10 can withstand; and
- the mechanical power *P_{GT_LIM}* gas turbine 7 can still produce without exceeding the set threshold values of the maximum mechanical and thermal stress gas turbine 7 can withstand; and
- the maximum mechanical power *P_{GT_MAX}* gas turbine 7 can produce in relation to the set threshold values of the maximum mechanical and thermal stress gas turbine 7 can withstand.

More specifically, electronic processing unit 23 calculates power *P_{GT_LIM},* among other things, on the basis of compressor 5 air intake temperature *T_{AIR},* and gas turbine 7 exhaust gas temperature *T_{GT_EXH}.*

Powers *P_{REQ}*, *P_{ST_LIM}* and *P_{GT_LIM},* power difference Δ*P*, voltage *V_{f}__{REQ},* and voltage difference Δ*V* are then supplied to electronic processing unit 24 which, on the basis of powers *P_{REQ}* and *P_{ST_LIM}* and power difference Δ*P*, calculates and generates the instantaneous mechanical power *P_{ST_REQ}* required of steam turbine 10, and, on the basis of powers *P_{REQ}* and *P_{GT_LIM}* and power difference Δ*P*, calculates and generates the mechanical power *P_{GT_REQ}* required of gas turbine 7.

On the basis of voltage *V_{f_REQ}* and voltage difference Δ*V*, electronic processing unit 24 also calculates and generates the voltage *V_{REQ}* required of generator 4 for voltage *V_{EL}* to equal reference voltage *V_{REF},* and for voltage difference Δ*V* to equal zero.

To improve stability of the plant during operating stages of plant 1 in which quantities *P_{ST REQ}, P_{GT REQ}* and *V_{REQ}* are all interdependent and tend to vary simultaneously, thus resulting in unstable operation of the plant, e.g. during a transient state, electronic processing unit 24 is configured to decouple the power output quantities from the voltage output quantities.

For example, in the event of a sharp variation in the power *P_{REQ}* required of the plant, electronic processing unit 24 controls simultaneously and coordinately : powers *P_{ST_REQ}* and *P_{GT_REQ}* as a function of the new power *P_{REQ}* value, and the voltage *V_{REQ}* required of generator 4 for electric power *P_{EL}* to vary with no effect whatsoever on the instantaneous value of voltage *V_{G}.*

Conversely, in the event of a sharp variation in voltage *V_{G}* at the terminals of generator 4, electronic processing unit 24 controls, again simultaneously and coordinately, voltage *V_{REQ}* as a function of the new voltage difference Δ*V* value, and powers *P_{ST_REQ}* and *P_{GT_REQ}* to modify voltage *V_{G}* with no variation in electric power *P_{EL}.*

To control start-up of gas turbine 7, electronic processing unit 25 receives: power *P_{GT_REQ},* rotation speed *N_{GT_REF}* required of gas turbine 7, power *P_{GT_LIM},* air temperature *T_{AIR},* and gas turbine 7 exhaust gas temperature *T_{GT_EXH}.*

More specifically, on the basis of the above input quantities, electronic processing unit 25 calculates the air flow *Q_{AIR_REQ}* and the fuel flow *Q_{FUEL_REQ}* required by compressor 5 and combustion chamber 6 respectively, for gas turbine 7 to produce the required power *P_{GT_REQ}.*

Quantities *Q_{FUEL_REQ}* and *Q_{AIR_REQ}* are then supplied to electronic processing unit 28, which accordingly controls opening of fuel feed valves *CGV* and air feed valves *IGV* to combustion chamber 6.

To control start-up of steam turbine 10, electronic processing unit 26 receives:
- the temperature *T_{ST_EXH}* of the exhaust steam from high-pressure section 16 of steam turbine 10;
- the instantaneous rotation speed *N_{ST}* of steam turbine 10;
- a signal *C_{ENG},* from self-synchronizing clutch 11, indicating whether or not the rotor of generator 4 is engaged by clutch 11;
- the rotation speed *N_{GT}* of gas turbine 7; and
- powers *P_{ST_MAX}* and *P_{ST_REQ}.*

More specifically, on the basis of the above input quantities, electronic processing unit 26 calculates an instantaneous steam flow value *Q_{HP_REQ}* required by high-pressure section 16 of steam turbine 10, and an instantaneous steam flow value *Q_{LP_REQ}* required by medium-low-pressure section 17 of steam turbine 10, for steam turbine 10 to produce the required power *P_{ST_REQ}.*

Steam flow values *Q_{HP_REQ}* and *Q_{LP_REQ}* are then supplied to electronic processing unit 27, together with:
- a signal, from a sensor connected to superheater 13, indicating the pressure *P_{SH}* of the steam from superheater 13;
- a signal, from a sensor connected to reheater 14, indicating the pressure *P_{RH}* of the steam from reheater 14 ; and
- power *P_{GT_REQ};*
so as to calculate and generate:
- a signal *CV_{REQ}* controlling the open position of steam feed valve CV to high-pressure section 16 of steam turbine 10;
- a signal *IV_{REQ}* controlling the open position of steam feed valve *IV* to medium-low-pressure section 17 of steam turbine 10;
- a signal *BP_{CV REQ}* controlling the open position of bypass valve *BP_{cv}* connecting the outlet of superheater 13 to the inlet of reheater 14; and
- a signal *BP_{IV_REQ}* indicating the open position of bypass valve *BP_{IV}* connecting the outlet of reheater 14 to condenser 18.

Electronic processing unit 29 is configured to control steam feed to combustion chamber 6 of gas turbine 7 to optimize plant efficiency in non-typical conditions, e.g. during start-up, when gas turbine 7 has been started up, and steam turbine 10 has not, and whenever the bypass valves are used and not all the steam produced is being used.

For which purpose, electronic processing unit 29 receives:
- a signal *Q_{FUEL_REQ},* from electronic processing unit 25, indicating the amount of fuel required by combustion chamber 6 for gas turbine 7 to produce the required power *P_{GT_REQ};*
- a signal *P_{STEAM_INJ},* from a pressure transducer (not shown in Figure 1) in pipe 19, indicating the steam pressure in pipe 19;
- a signal *T_{STEAM_INJ},* from a temperature transducer (not shown in Figure 1) in pipe 19, indicating the steam temperature in pipe 19; and
- a signal *Q_{STEAM_INJ_MAX},* from electronic processing unit 27, indicating the maximum amount of steam that can be fed into combustion chamber 6;
and calculates and generates:
- a signal *CV_{STEAM_INJ_REQ}* controlling the open position of the steam feed valve *CV_{STEAM_INJ}* to combustion chamber 6;
- a signal *CV_{SH}__{REQ}* controlling the open position of valve *CV_{SH};* and
- a signal *CV_{SAT}__{REQ}* controlling the open position of valve *CV_{SAT}.*

Once the plant is started up, integrated control system 20 constantly monitors all the plant 1 operating quantities associated with the signals from the sensors and measuring instruments connected to plant 1, and continuously controls and regulates power *P_{ST_REQ}* and *P_{GT_REQ}* required of steam turbine 10 and gas turbine 7 respectively, as well as the mechanical power *P_{REQ} -* equal to the sum of power *P_{ST}__{REQ}* and *P_{GT}__{REQ} -* required of plant 1 for the instantaneous electric power *P_{EL}* produced by plant 1 to equal reference electric power *P_{REF}* at all times and to rapidly balance any variation in network frequency to reestablish a close to nominal network frequency.

For which purpose, system 20 is configured to control the power output of the two turbines coordinately, by first regulating the power output of steam turbine 10, and then that of gas turbine 7 which, on account of its construction characteristics, modifies its mechanical power output much more slowly than steam turbine 10.

More specifically, mechanical power *P_{ST_REQ}* is the mechanical power required of steam turbine 10 for plant 1 to produce the required power *P_{REQ}* and so begin rapidly balancing power difference Δ*P*, while mechanical power *P_{GT_REQ}* is the mechanical power required of gas turbine 7 to sustain production of mechanical power *P_{ST_REQ}* by steam turbine 10, and which may be necessary to complete the balancing of power variation Δ*P* commenced by steam turbine 10.

On the basis of the mechanical power *P_{ST_REQ}* required of steam turbine 10, electronic processing units 26 and 27 calculate all the operating quantities of steam cycle 3 necessary for steam turbine 10 to produce mechanical power *P_{ST_REQ},* and on the basis of which system 20 controls the actuators connected to steam turbine 10, such as those regulating the open position of steam feed valve CV to high-pressure section 16 of steam turbine 10, those regulating the open position of steam feed valve *IV* to medium-low-pressure section 17 of steam turbine 10, and, if pressures *P_{SH}* and *P_{RH}* are to be maintained constant, those regulating the open position of bypass valve *BP_{CV}* and the open position of bypass valve *BP_{IV}.*

In the case of a short-term transient, the mechanical power output *P_{GT}__{REQ}* of gas turbine 7 need not normally be modified, and power variation Δ*P* can be compensated by simply regulating the mechanical power output *P_{ST_REQ}* of steam turbine 10, if this is available.

Once the steam generator 9 and steam turbine 10 quantities are regulated, and steam turbine 10 begins producing the required mechanical power *P_{ST_REQ},* control system 20 determines whether the mechanical power *P_{GT_REQ}* currently being produced by gas turbine 7 is sufficient to sustain production of mechanical power *P_{ST_REQ}* by steam turbine 10.

In the case of a long-term transient, in fact, steam turbine 10 must continue producing power *P_{ST_REQ}* until the operating transient ceases. In which case, the mechanical power output *P_{GT_REQ}* of gas turbine 7 may also need regulating to "sustain" steam turbine 10.

Electronic processing units 25, 28 and 29 therefore calculate all the operating quantities of gas cycle 2 necessary for gas turbine 7 to produce the required mechanical power *P_{GT_REQ},* and on the basis of which system 20 controls the actuators connected to gas turbine 7, such as those regulating the open position of fuel feed valve *CGV* to combustion chamber 6, those regulating the open position of air feed valve *IGV* to combustion chamber 6, and, if necessary, those regulating the open position of the valves controlling exhaust steam feed from steam turbine 10 to the combustion chamber of gas turbine 7.

The main advantage of the invention lies in enabling a combination-cycle electric power plant to react extremely rapidly to transient operating states.

By continuously regulating steam turbine 10, whose mechanical power output can be modified rapidly, the plant is able to rapidly balance any variation in power draw by the network, and so successfully control any short-term transient states. And subsequent regulation of the gas turbine allows the combination-cycle plant to also handle long-term transient states.

The system according to the present invention therefore enables electric power plants to successfully control transient operating states and so ensure a more or less constant network voltage frequency.

Clearly, changes may be made to the method and system as described and illustrated herein without, however, departing from the scope of the present invention as defined in the accompanying Claims.

The algorithms implemented by electronic processing units 21-29, for example, may be integrated in one centralized computing unit configured to control all the operating quantities of plant 1 simultaneously and coordinately.

## Claims

1. A system (20) for controlling a combination-cycle electric power plant (1) comprising a gas cycle system (2), a steam cycle system (3) connected to said gas cycle system (2), and an electric energy generating system (4) connected to said gas cycle system (2) and to said steam cycle system (3),
**characterized by** comprising electronic processing means (21, 24) configured to :
- determine a variation (Δ*P*, Δ*V*) in a first operating output quantity *(P_{EL}, V_{G})* of said plant (1) with respect to a predetermined value *(P_{REF}, V_{REF}) ;*
- determine a second operating output quantity *(P_{REQ}, V_{REQ})* of said plant (1), that can be used to balance said variation (Δ*P*, Δ*V*) in said first operating output quantity *(P_{EL}, V_{G})* and restore said predetermined value *(P_{REF}, V_{REF}) ;*
- control first operating conditions of said steam cycle system (3) on the basis of said second operating output quantity *(P_{REQ}, V_{REQ})* of said plant (1) to balance said variation (Δ*P*, Δ*V*) in said first operating output quantity *(P_{EL}, V_{G})* and restore said predetermined value *(P_{REF}, V_{REF}) ;* and
- control second operating conditions of said gas cycle system (2) on the basis of said second operating output quantity *(P_{REQ}, V_{REQ})* to assist in balancing said variation (Δ*P*, Δ*V*) in said first operating output quantity *(P_{EL}, V_{G})* and restoring said predetermined value *(P_{REF}, V_{REF})* in the event control of the first operating conditions of said steam cycle system (3) fails to balance said variation (Δ*P*, Δ*V*) in said first operating output quantity *(P_{EL}, V_{G})* and restore said predetermined value *(P_{REF}, V_{REF}) .*

2. A system (20) as claimed in Claim 1, wherein said first operating output quantity *(P_{EL}, V_{G})* of said plant (1) comprises at least one of:
- an actual electric power *(P_{EL})* produced by said plant (1), and
- a voltage (*V_{G}*) produced by said electric energy generating system (4);
said predetermined value *(P_{REF}, V_{REF})* comprises at least one of:
- a target reference electric power *(P_{REF})* producible by said plant (1), and
- a target reference voltage *(V_{REF})* producible by said plant (1);
and said second operating output quantity *(P_{REQ}, V_{f_REQ}, V_{REQ})* of said plant (1) comprises at least:
- a mechanical power *(P_{REQ})* required of said plant (1) ,
- an excitation voltage *(V_{f_REQ})* of said electric energy generating system (4), and
- a voltage *(V_{REQ})* required of said electric energy generating system (4).

3. A system (20) as claimed in Claim 2, wherein said electronic processing means (21) are configured to:
. monitor at least one of a number of output quantities of said plant (1) comprising:
- a first actual rotation speed *(N_{GT})* of a gas turbine (7) forming part of said gas cycle system (2),
- said actual electric power *(P_{EL})* produced by said plant (1),
- said voltage (*V_{G}*) produced by said electric energy generating system (4),
- a quantity *(MB)* indicating an operating state of a main switch *(BAC)* of said plant (1);
. memorize at least one of a number of reference quantities of said plant (1) comprising:
- said target reference electric power *(P_{REF})* producible by said plant (1),
- a target rotation speed *(N_{GT_REF})* of said gas turbine (7) as a function of said target reference electric power *(P_{REF}),*
- said target reference voltage *(V_{REF});* and
. determine, on the basis of said operating output quantities and said reference quantities of said plant (1) :
- a first variation (Δ*P*) in said actual electric power *(P_{EL})* with respect to said target reference electric power *(P_{REF}),* and
- a second variation (Δ*V*) in said actual voltage (*V_{G}*) produced by said electric energy generating system with respect to said target reference voltage *(V_{REF}).*

4. A system (20) as claimed in Claim 3, wherein said electronic processing means (21) are configured to determine said excitation voltage *(V_{f_REQ})* of said electric energy generating system (4) on the basis of said second variation (Δ*V*) in said actual voltage.

5. A system (20) as claimed in Claim 3, wherein said electronic processing means (21) are configured to determine said mechanical power *(P_{REQ})* required of said plant (1) on the basis of said first variation (Δ*P*).

6. A system (20) as claimed in Claim 5, wherein said electronic processing means (21, 22, 24) are configured to determine, on the basis of at least two of:
- said mechanical power *(P_{REQ})* required of said plant (1),
- said first variation (Δ*P*) in said actual electric power *(P_{EL}),*
- said second variation (Δ*V*) in said actual voltage *(V_{G})*, and
- said excitation voltage *(V_{f_REQ})* of said electric energy generating system (4),
a mechanical power output *(P_{ST_REQ})* required of said steam cycle to balance said first variation (Δ*P*) in said actual electric power *(P_{EL})* and restore said predetermined value *(P_{REF}, V_{REF}).*

7. A system (20) as claimed in Claim 5, wherein said electronic processing means (21, 22, 24) are configured to determine, on the basis of at least two of:
- said mechanical power *(P_{REQ})* required of said plant (1),
- said first variation (Δ*P*) in said actual electric power (*P_{EL}*)*,*
- said second variation (Δ*V*) in said actual voltage (*V_{G}*), and
- said excitation voltage *(V_{f_REQ})* of said electric energy generating system (4),
a mechanical power output *(P_{GT_REQ})* required of said gas cycle to assist in balancing said first variation (Δ*P*) in said actual electric power (*P_{EL}*) and restoring said predetermined value *(P_{REF}, V_{REF}).*

8. A system (20) as claimed in Claim 5, wherein said electronic processing means (21, 22, 24) are configured to determine said voltage *(V_{REQ})* required of said electric energy generating system (4) on the basis of said mechanical power *(P_{REQ})* required of said plant (1), said first variation (Δ*P*) in said actual electric power *(P_{EL}),* said second variation (Δ*V*) in said actual voltage (*V_{G}*)*,* and said excitation voltage *(V_{f_REQ})* of said electric energy generating system (4).

9. A system (20) as claimed in Claim 8, wherein said electronic processing means (22) are configured to:
- memorize threshold values *(P_{ST}__{LIM}, P*_{*GT*_}*_{LIM})* of operating parameters of said steam cycle system (3) and of said gas cycle system (2); and
- determine said mechanical power outputs required of said steam cycle *(P_{ST}__{REQ})* and of said gas cycle *(P_{GT}__{REQ})* on the basis of said threshold values *(P_{ST_LIM}, P_{GT_LIM}) .*

10. A system (20) as claimed in Claim 7 or 8, wherein said steam cycle system (3) comprises a steam generator (9) connected to said steam turbine (10) with the interposition of first valve means *(CV, IV);* and condensing means (18) interposed between said steam turbine (10) and said steam generator (9); said steam generator (9) comprising a first and a second member (13, 14); said steam turbine (10) comprising a high-pressure section (16) and a medium-low-pressure section (17); and said first valve means *(CV, IV)* comprising a first valve (*CV*) interposed between said first member (13) and said high-pressure section (16), a second valve *(IV)* interposed between said second member (14) and said medium-low-pressure section (17), a third bypass valve *(BP_{CV})* interposed between said first member (13) and said second member (14), and a fourth bypass valve *(BP_{IV})* interposed between said second member (14) and said condensing means (18);
and wherein said electronic processing means (26, 27) are configured to control an open position of said first and second *(CV, IV)* and/or said third and fourth *(BP_{CV}, BP_{IV})* valve on the basis of said mechanical power outputs required of said steam cycle *(P_{ST_REQ})* and of said gas cycle *( P_{GT}__{REQ}) .*

11. A system (20) as claimed in any one of the foregoing Claims, wherein said gas cycle system (2) comprises a compressor (5), a combustion chamber (6) connected to said compressor (5), and a gas turbine (7) connected to said combustion chamber (6) with the interposition of second valve means *(CGV, IGV);* and wherein said electronic processing means (25, 28) are configured to control an open position of said second valve means *(CGV)* on the basis of said mechanical power output required of said gas cycle *(P_{GT_REQ}).*

12. A system (20) as claimed in Claim 11, wherein said first member (13) of said steam generator (9) is connected to said combustion chamber (6) of said gas turbine (7) with the interposition of third valve means *(CV_{STEAM}__{INJ}, CV_{SH}, CV_{SAT})* and wherein said electronic processing means (29) are configured to control an open position of said third valve means *(CV_{STEAM_INJ}, CV_{SH}, CV_{SAT})* on the basis of said mechanical power output required of said gas cycle *(P_{GT}__{REQ}).*

13. A system (20) as claimed in any one of the foregoing Claims, wherein said plant (1) is a single-shaft plant, and said electric energy generating system comprises a single electric energy generator (4) connected to both said steam cycle system (3) and said gas cycle system (2).

14. A system (20) as claimed in any one of the foregoing Claims, wherein said electronic processing means (21, 24) are configured to determine an unstable operating condition of said plant (1) on the basis of said first variation (Δ*P*) in said actual electric power *(P_{EL})* with respect to said target reference electric power *(P_{REF}),* and of said second variation (Δ*V*) in said actual voltage (*V_{G}*) produced by said electric energy generating system with respect to said target reference voltage *(V_{REF}),* and to control, simultaneously and coordinatedly, said mechanical power outputs required respectively of said steam cycle *(P_{ST_REQ})* and said gas cycle *(P_{GT_REQ}),* and said voltage *(V_{REQ})* required of said electric energy generating system (4), so as to balance said unstable operating condition of said plant (1).

15. A system (20) as claimed in Claim 14, wherein, when said unstable operating condition of said plant (1) substantially depends on said first variation (Δ*P*) in said actual electric power *(P_{EL}),* said electronic processing means (24) are configured to determine:
- said mechanical power outputs required of said steam cycle *(P_{ST_REQ})* and said gas cycle *(P_{GT_REQ})* on the basis of said mechanical power *(P_{REQ})* required of said plant (1), and
- said voltage *(V_{REQ})* required of said electric energy generating system (4) on the basis of said second variation (Δ*V*) in said actual voltage (*V_{G}*) necessary for said plant (1) to produce said actual electric power *(P_{EL})* with no change in said actual voltage (*V_{G}*).

16. A system (20) as claimed in Claim 14, wherein, when said unstable operating condition of said plant substantially depends on said second variation (Δ*V*) in said actual voltage (*V_{G}*)*,* said electronic processing means (24) are configured to determine:
- said voltage *(V_{REQ})* required of said electric energy generating system (4) on the basis of said second variation (Δ*V*) in said actual voltage (*V_{G}*), and
- said mechanical power outputs required of said steam cycle *(P_{ST_REQ})* and said gas cycle *(P_{GT_REQ})* for said electric energy generating system (4) to produce said actual voltage (*V_{G}*) with no change in said actual electric power (*P_{EL}*)*.*

17. A method of controlling a combination-cycle electric power plant (1) comprising a gas cycle system (2), a steam cycle system (3) connected to said gas cycle system (2), and an electric energy generating system (4) connected to said gas cycle system (2) and said steam cycle system (3),
**characterized by** comprising:
- determining a variation (Δ*P*, Δ*V*) in a first operating output quantity *(P_{EL}, V_{G})* of said plant (1) with respect to a predetermined value *(P_{REF}, V_{REF}) ;*
- determining a second operating output quantity *(P_{REQ}, V_{REQ})* of said plant (1), which can be used to balance said variation (Δ*P*, Δ*V*) in said first operating output quantity *(P_{EL}, V_{G})* and restore said predetermined value *(P_{REF}, V_{REF});*
- controlling first operating conditions of said steam cycle system (3) on the basis of said second operating output quantity *(P_{REQ}, V_{REQ})* of said plant (1) to balance said variation (Δ*P*, Δ*V*) in said first operating output quantity *(P_{EL}, V_{G})* and restore said predetermined value *(P_{REF}, V_{REF});* and
- controlling second operating conditions of said gas cycle system (2) on the basis of said second operating output quantity *(P_{REQ}, V_{REQ})* to assist in balancing said variation (Δ*P*, Δ*V*) in said first operating output quantity *(P_{EL}, V_{G})* and restoring said predetermined value *(P_{REF}, V_{REF})* in the event control of the first operating conditions of said steam cycle system (3) fails to balance said variation (Δ*P*, Δ*V*) in said first operating output quantity *(P_{EL}, V_{G})* and restore said predetermined value *(P_{REF}, V_{REF}).*

18. A method as claimed in Claim 17, wherein said first operating output quantity *(P_{EL}, V_{G})* of said plant (1) comprises at least one of:
- an actual electric power *(P_{EL})* produced by said plant (1), and
- a voltage (*V_{G}*) produced by said electric energy generating system (4);
said predetermined value *(P_{REF}, V_{REF})* comprises at least one of:
- a target reference electric power *(P_{REF})* producible by said plant (1), and
- a target reference voltage *(V_{REF})* producible by said plant (1);
and said second operating output quantity *(P_{REQ}, V_{f_REQ}, V_{REQ})* of said plant (1) comprises at least:
- a mechanical power *(P_{REQ})* required of said plant (1),
- an excitation voltage *(V_{f_REQ})* of said electric energy generating system (4), and
- a voltage *(V_{REQ})* required of said electric energy generating system (4).

19. A method as claimed in Claim 18, and comprising:
. monitoring at least one of a number of output quantities of said plant (1) comprising:
- a first actual rotation speed *(N_{GT})* of a gas turbine (7) forming part of said gas cycle system (2),
- said actual electric power (*P_{EL}*) produced by said plant (1),
- said voltage (*V_{G}*) produced by said electric energy generating system (4),
- a quantity *(MB)* indicating an operating state of a main switch *(BAC)* of said plant (1) ;
. memorizing at least one of a number of reference quantities of said plant (1) comprising:
- said target reference electric power *(P_{REF})* producible by said plant (1),
- a target rotation speed *(N_{GT_REF})* of said gas turbine (7) as a function of said target reference electric power *(P_{REF}),*
- said target reference voltage *(V_{REF});* and
. determining, on the basis of said operating output quantities and said reference quantities of said plant (1) :
- a first variation (Δ*P*) in said actual electric power *(P_{EL})* with respect to said target reference electric power *(P_{REF}),* and
- a second variation (Δ*V*) in said actual voltage *(V_{G})* produced by said electric energy generating system with respect to said target reference voltage *(V_{REF}).*

20. A method as claimed in Claim 19, wherein said excitation voltage *(V_{f_REQ})* of said electric energy generating system (4) is determined on the basis of said second variation (Δ*V*) in said actual voltage.

21. A method as claimed in Claim 20, wherein said mechanical power *(P_{REQ})* required of said plant (1) is determined on the basis of said first variation (Δ*P*).

22. A method as claimed in Claim 21, and comprising determining a mechanical power output *(P_{ST_REQ}),* required of said steam cycle to balance said first variation (Δ*P*) in said actual electric power *(P_{EL})* and restore said predetermined value *(P_{REF}, V_{REF}),* on the basis of at least two of:
- said mechanical power *(P_{REQ})* required of said plant (1),
- said first variation (Δ*P*) in said actual electric power (*P_{EL}*)*,*
- said second variation (Δ*V*) in said actual voltage (*V_{G}*), and
- said excitation voltage *(V_{f_REQ})* of said electric energy generating system (4).

23. A method as claimed in Claim 21, and comprising determining a mechanical power output *(P_{GT_REQ}),* required of said gas cycle to assist in balancing said first variation (Δ*P*) in said actual electric power *(P_{EL})* and restoring said predetermined value *(P_{REF}, V_{REF}),* on the basis of at least two of:
- said mechanical power *(P_{REQ})* required of said plant (1) ,
- said first variation (Δ*P*) in said actual electric power *(P_{EL}),*
- said second variation (Δ*V*) in said actual voltage (*V_{G}*), and
- said excitation voltage *(V_{f_REQ})* of said electric energy generating system (4).

24. A method as claimed in Claim 21, and comprising determining said voltage *(V_{REQ})* required of said electric energy generating system (4) on the basis of said mechanical power *(P_{REQ})* required of said plant (1), said first variation (Δ*P*) in said actual electric power *(P_{EL}),* said second variation (Δ*V*) in said actual voltage (*V_{G}*) *,* and said excitation voltage *(V_{f-REQ})* of said electric energy generating system (4).

25. A method as claimed in Claim 24, and comprising:
- memorizing threshold values *(P_{ST_LIM}, P_{GT_LIM})* of operating parameters of said steam cycle system (3) and of said gas cycle system (2); and
- determining said mechanical power outputs required of said steam cycle *(P_{ST}__{REQ})* and of said gas cycle *(P_{GT}__{REQ})* on the basis of said threshold values *(P_{ST_LIM}, P_{GT}__{LIM}).*

26. A method as claimed in Claim 23 or 24, wherein said steam cycle system (3) comprises a steam generator (9) connected to said steam turbine (10) with the interposition of first valve means *(CV, IV);* and condensing means (18) interposed between said steam turbine (10) and said steam generator (9); said steam generator (9) comprising a first and a second member (13, 14); said steam turbine (10) comprising a high-pressure section (16) and a medium-low-pressure section (17); and said first valve means *(CV, IV)* comprising a first valve (*CV*) interposed between said first member (13) and said high-pressure section (16), a second valve (*IV*) interposed between said second member (14) and said medium-low-pressure section (17), a third bypass valve *(BP_{CV})* interposed between said first member (13) and said second member (14), and a fourth bypass valve *(BP_{IV}*) interposed between said second member (14) and said condensing means (18); and wherein said method comprises:
controlling an open position of said first and second *(CV, IV)* and/or said third and fourth *(BP_{CV}, BP_{IV})* valve on the basis of said mechanical power outputs required of said steam cycle *(P_{ST_REQ})* and of said gas cycle *(P_{GT_REQ}).*

27. A method as claimed in any one of Claims 17 to 26, wherein said gas cycle system (2) comprises a compressor (5), a combustion chamber (6) connected to said compressor (5), and a gas turbine (7) connected to said combustion chamber (6) with the interposition of second valve means *(CGV, IGV);* and wherein said method comprises:
controlling an open position of said second valve means *(CGV)* on the basis of said mechanical power output required of said gas cycle *(P_{GT_REQ}) .*

28. A method as claimed in Claim 27, wherein said first member (13) of said steam generator (9) is connected to said combustion chamber (6) of said gas turbine (7) with the interposition of third valve means *(CV_{STEAM_INJ}, CV_{SH}, CV_{SAT});* and wherein said method comprises controlling an open position of said third valve means *(CV_{STEAM_INJ}, CV_{SH}, CV_{SAT})* on the basis of said mechanical power output required of said gas cycle *(P_{GT_REQ}) .*

29. A method as claimed in any one of Claims 17 to 28, wherein said plant (1) is a single-shaft plant, and said electric energy generating system comprises a single electric energy generator (4) connected to both said steam cycle system (3) and said gas cycle system (2).

30. A method as claimed in any one of Claims 17 to 29, and comprising:
- determining an unstable operating condition of said plant (1) on the basis of said first variation (Δ*P*) in said actual electric power *(P_{EL})* with respect to said target reference electric power *(P_{REF}),* and of said second variation (Δ*V*) in said actual voltage (*V_{G}*) produced by said electric energy generating system with respect to said target reference voltage *(V_{REF});* and
- controlling, simultaneously and coordinatedly, said mechanical power outputs required respectively of said steam cycle *(P_{ST_REQ})* and said gas cycle *(P_{GT_REQ}),* and said voltage *(V_{REQ})* required of said electric energy generating system (4), so as to balance said unstable operating condition of said plant (1).

31. A method as claimed in Claim 30, wherein, when said unstable operating condition of said plant (1) substantially depends on said first variation (Δ*P*) in said actual electric power *(P_{EL}),* said controlling to balance said unstable operating condition of said plant (1) comprises:
- determining said mechanical power outputs required of said steam cycle *(P_{ST_REQ})* and said gas cycle *(P_{GT_REQ})* on the basis of said mechanical power *(P_{REQ})* required of said plant (1); and
- determining said voltage *(V_{REQ})* required of said electric energy generating system (4) on the basis of said second variation (Δ*V*) in said actual voltage (*V_{G}*) necessary for said plant (1) to produce said actual electric power *(P_{EL})* with no change in said actual voltage (*V_{G}*)*.*

32. A method as claimed in Claim 30, wherein, when said unstable operating condition of said plant substantially depends on said second variation (Δ*V*) in said actual voltage (*V_{G}*), said controlling to balance said unstable operating condition of said plant (1) comprises:
- determining said voltage *(V_{REQ})* required of said electric energy generating system (4) on the basis of said second variation (Δ*V*) in said actual voltage (*V_{G}*); and
- determining said mechanical power outputs required of said steam cycle *(P_{ST REQ})* and said gas cycle *(P_{GT REQ})* for said electric energy generating system (4) to produce said actual voltage (*V_{G}*) with no change in said actual electric power *(P_{EL}) .*

33. A data processing product that can be loaded into the memory of a digital processor, said data processing product comprising software code portions for implementing the method as claimed in any one of Claims 1 to 12, when said data processing product is performed on said digital processor.
